# EUROPEAN PATENT SPECIFICATION

(11) **EP 2 031 713 B1**
(45) Date of publication and mention of the grant of the patent: **04.09.2019**
(21) Application number: 08012416.7
(22) Date of filing: 09.07.2008
(51) Int. Cl.: H01S 3/067

(54) **Method and arrangement for mitigating bend distortion impact in a fiber amplifier or laser**
Verfahren und Anordnung zur Reduktion der Kurvenverzerrungswirkung in einem Faserverstärker oder Laser
Méthode et procédé pour atténuer l'impact des distorsions dans un amplificateur à fibre ou un laser

(30) Priority: 30.08.2007 US 847361
(43) Date of publication of application: 04.03.2009
(73) Proprietor: OFS Fitel, LLC, Norcross, GA 30071 (US)
(72) Inventor: Fini, John M., Jersey City, NJ 07302 (US)
(74) Representative: Zimmermann, Tankred Klaus

(56) References cited:
- WO-A1-01/69313
- US-A1- 2005 041 702
- US-A1- 2006 263 024
- US-B1- 6 215 582

## Description

### BACKGROUND OF THE INVENTION

### Field of the Invention:

The present invention relates generally to optical fibers, and more specifically to the arrangement of an optical amplifying fiber to mitigate bend distortion.

### Discussion of the Background:

It is well known that signal transmission fibers produce optical signal losses when bent beyond a critical bend radius. Thus, tight bending of signal transmission fibers is generally avoided. Amplification fibers provide a gain medium for amplifying signal light traveling therethrough, and have application in both optical amplifiers and fiber lasers. For example, erbium doped fiber amplifiers (EDFAs) provide a relatively short length (tens of meters for example) of optical fiber that is doped with erbium to provide amplification at a wavelength of signal light traveling through the doped fiber. Management of propagation losses is part of the generally accepted design of amplification fibers. Some bending can be beneficial in a fiber amplifier, since bend losses preferentially remove unwanted modes propagating in the fiber. Excessive bend losses of the signal light can be prevented by choosing an appropriate bend radius and fiber index profile.

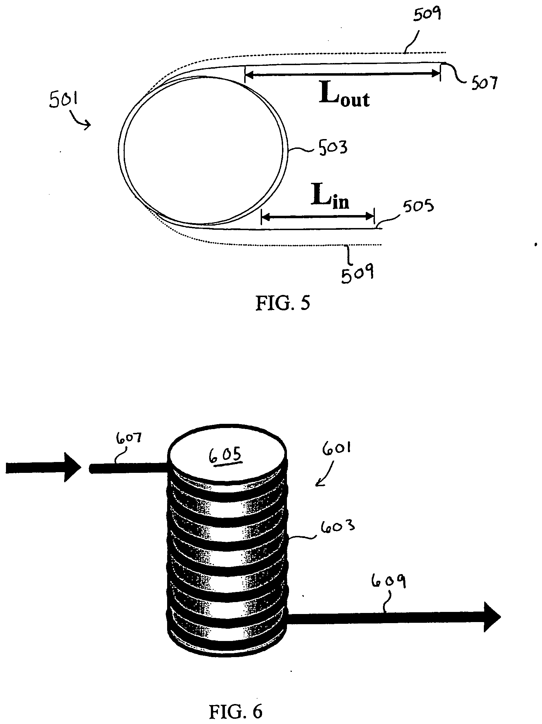

Thus, amplification fibers are typically coiled on a spool to provide small packaging for an optical amplifier or fiber laser, for example. Figure 6 shows a coiled amplification fiber assembly that can be used in an optical fiber amplifier or fiber laser. As seen in this figure, the assembly includes an amplification fiber 601 having a coiled portion 603 that is coiled around spool 605. A first end 607 of the amplification fiber 601 extends from the coiled portion 603 to allow coupling to a signal input source, and a second end 609 of the amplification fiber extends from the coiled portion 603 to allow coupling to an output device, as shown by the arrows in FIG. 6.

US 2006/263024 A1 discloses large cores fibers that can propagate few modes or a single mode while introducing loss to higher order modes. The fibers comprise straight portions.

WO 01/69313 A1 teaches a helical fiber amplifier having straight fiber portions at an input and an output thereof.

The present inventors have recognized that the configuration of conventional amplification fiber assemblies such as that shown in FIG. 6 is driven primarily by requirements of packaging, coupling, and bend-induced losses, with little consideration given to mode distortion induced by a bend. With trends in the industry toward higher power output for optical amplifiers and fiber lasers, however, the present inventors have further recognized that consideration of bend distortion of the amplification fiber may help to improve performance of optical devices incorporating such fibers.

### SUMMARY OF THE INVENTION

Accordingly, one object of the present invention is to address the above and/or other issues relating to amplification fiber assemblies.

The invention provides a method of producing an optical amplifying assembly according to claim 1 or 4 and an amplifying fiber according to claim 7.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1A shows a schematic refractive index profile and corresponding intensity profile for a typical amplification fiber arranged in a straight line;
FIG. 1B shows spatial location of an optical mode within the straight fiber of FIG. 1A;
FIG. 2A shows an equivalent index profile and corresponding intensity profile for the same amplification fiber of FIG. 1A, but having a bend therein;
FIG. 2B shows spatial location of the optical mode within the bent fiber of FIG 2A;
FIG. 3 is a graph showing the normalized signal power along an amplification fiber length;
FIG. 4A is a flow chart depicting a method of creating an amplifying fiber assembly in accordance with an embodiment of the present invention;
FIG. 4B is a flow chart depicting a method of creating an amplifying fiber assembly in accordance with another embodiment of the present invention
FIG. 5 is a schematic illustration of an amplification fiber assembly in accordance with an embodiment of the invention; and
FIG. 6 shows a coiled amplification fiber assembly that can be used in an optical fiber amplifier or fiber laser.

### DESCRIPTION OF THE PREFERRED EMBODIMENTS

As discussed above, despite industry focus on packaging requirements, coupling and bend induced losses in the design of amplification fiber assemblies, the present inventors recognized that consideration of additional effects of bending optical amplification fibers may help to improve performance of optical devices incorporating such fibers. Specifically, conventional design of amplification fiber assemblies typically reach a design balance where the fiber is bent just enough to strip unwanted higher modes of light, but little enough to not incur too large a bend propagation loss penalty. However, this tradeoff is made without consideration of the importance of modefield distortion due to bending. Thus, the present inventors studied the effects of bending in an amplification fiber. According to one embodiment, most of the fiber can be bent to strip the unwanted light within the constraint of reasonable bend loss, but a critical portion can be unbent to avoid the impact of modefield distortion.

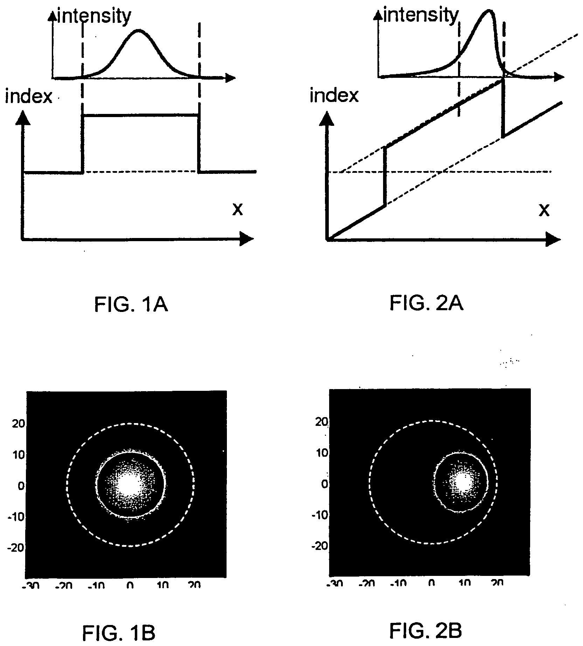

FIG. 1A shows a schematic refractive index profile and corresponding intensity profile for a conventional amplifier fiber arranged in a straight line, and FIG. 1B shows the calculated spatial location of an optical mode within such a fiber. As seen in FIG. 1A, the intensity profile of the optical mode substantially corresponds to the core region of higher refractive index. Further, FIG. 1B shows that the optical mode is spatially centered within the doped core region of the straight fiber. FIG. 2A shows a schematic equivalent index profile and corresponding intensity profile for the same amplifier fiber of FIG. 1A, but having a bend therein, and FIG. 2B shows the calculated spatial location of the optical mode within the bent fiber. As seen in these figures, the refractive index profile of the bent fiber is shifted by the bend, and the intensity profile of the optical mode becomes contracted and displaced due to the change in the refractive index profile. FIG. 2B shows that the optical mode of the bent fiber is spatially contracted and displaced within the amplification fiber.

Thus, the present inventors recognized the significance of bend distortion in causing optical impairments. In particular, the inventors recognized that bending an amplification fiber can distort the optical mode of a signal within the fiber, and can adversely impact performance of an optical device, such as an optical amplifier or fiber laser, incorporating the bent amplification fiber. For example, the inventors recognized that bend distortion can reduce the effective mode area of an optical fiber, leading to increased optical nonlinearity and ultimately limiting the power that can be obtained from the device incorporating such fiber. As another example, bend distortion can change the interaction of the optical modes with gain materials of the fiber, leading to poor extraction of energy by the signal mode, or poor suppression of unwanted modes.

The present inventors also recognized that bend distortion becomes particularly severe for amplification fibers with very large mode area. It is known that designing an amplification fiber with a large mode field diameter (MFD) can keep non-linear effects in the fiber low. This large core size and MFD can also provide other improvements in amplifier parameters, such as extractable energy. Thus, there is a trend toward increasing the MFD of amplification fibers. The present inventors have realized that this trend will lead to increasing importance of bend considerations in the design of future amplification fiber assemblies. For example, certain large mode area fibers will suffer significant bend distortion even for gentle (large-radius) bends that may be difficult to avoid in practice. More specifically, moderate increases in nonlinearity due to bend distortion have been observed for a conventional, step-index amplifier fiber with a core diameter of only 27 microns, and larger impact is observed for larger core sizes.

Although bending of an amplification fiber can have adverse impacts on a device incorporating the amplification fiber as discussed above, providing the amplification fiber in an unbent outstretched position would result in an unreasonably large package size for devices incorporating the amplification fiber. Further, as noted above, bending of the amplification fiber can strip unwanted higher modes of light. The present inventors further discovered that impairments caused by bend distortion are not contributed equally by all parts of the amplification fiber.

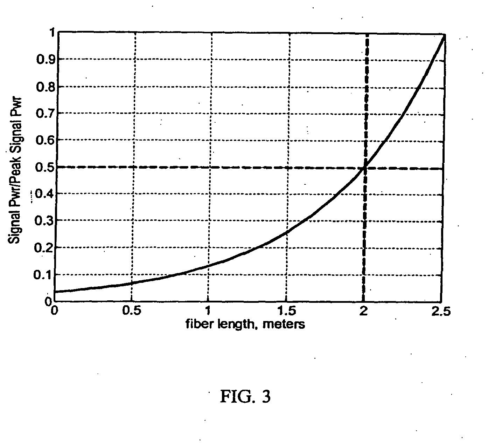

For example, noise produced by optical nonlinearities (such as Raman and Brillouin effects) is generated primarily in regions of high signal light intensity within the amplification fiber. As a simple example, consider an amplifier with 15dB of signal gain over a total fiber length of 2.5 meters, and which is assumed to be limited by nonlinear impairments. FIG. 3 is a graph showing the normalized signal power along the amplification fiber length, assuming a simple exponential dependence. Nonlinearities accumulate at a rate *γP*₀ ∝ *P*₀ / *A_{eff}*, where P₀ is the optical signal power, and the nonlinear coefficient γ is inversely proportional to the effective area A_{eff}. As seen by the dashed lines in FIG. 3, only in the final 20% of the fiber length (50 cm, in this case) does the signal power reach 50% or more of its output value. Nonlinear impairments will then primarily be generated in this final portion of the fiber, assuming that nearly all of the fiber is coiled to the same bend radius, or assuming that nearly all of the fiber is straight. According to an embodiment of the present invention, this final 20% of the fiber can be maintained relatively straight while bending most of the fiber. In this way, a reasonable package size much smaller than the total 2.5 meter fiber unbent fiber length can be achieved, while simultaneously mitigating the nonlinear impairments that would otherwise be caused by the bend-induced reduction of effective area (for a fully-coiled fiber). However, the invention is not limited to the above-described embodiment. For example, an end portion of the fiber where the signal power reaches 80% or more of its output value may be selected to be maintained substantially straight.

As another example, the poor energy extraction resulting from reduced gain interaction will generally be associated with regions of lowest intensity. As noted above, a contracted or displaced optical mode can have poor overlap with the gain-doped region of the amplification fiber. Thus, at an input region of the fiber where intensity is relatively low, the fiber can also be arranged to mitigate bend distortions.

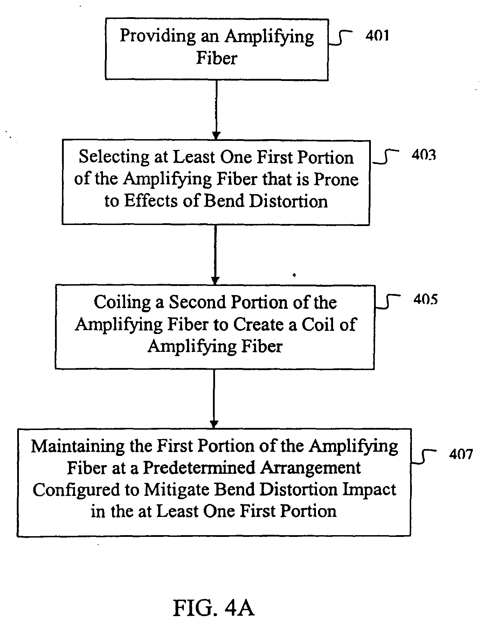

FIG. 4A is a flow chart depicting a method of creating an amplifying fiber assembly in accordance with an embodiment of the present invention. As seen in this figure, the method begins with providing an optical amplification or amplifying fiber in step 401. As used herein, the term "providing" an amplifying fiber is not limited to fabricating an amplification fiber, but may apply to obtaining, by any means, an amplification fiber to be arranged in an assembly in accordance with an embodiment of the invention. Further, the terms amplification fiber or amplifying fiber mean an optical fiber waveguide having a gain property for amplifying light traveling through the optical fiber. The amplifying fiber provided in step 401 may be a rare earth doped fiber such as a fiber doped with neodymium, ytterbium, erbium, thulium, praseodymium or holmium, for example. Further, the amplifying fiber has a predetermined straight or unbent length that can be several meters, for example. In one embodiment, the unbent length can be .5-10 meters. For lengths less than .5 meters, a straight-fiber configuration is a viable alternative. For lengths greater than 10m, the straight-fiber portion described by embodiments of this invention may end up being greater than 1m, in which case the laser may not be compact enough for most applications. However, application of embodiments of the invention to shorter or longer fibers may be advantageous in some instances.

In step 403, at least one portion of the amplification fiber that is prone to impairments caused by bending of the fiber is selected. More specifically, at least one first portion of the amplifying fiber is selected in which a given bend of the amplifying fiber will cause greater optical impairments than would be caused by substantially the same bend occurring at a second portion of the amplifying fiber. As used herein, the term "substantially the same bend" means a bend having substantially the same curvature radius (i.e. radius of curvature) and length. The second portion of the fiber may be the entire remaining length of the fiber (other than the first portion), or a portion of the remaining length. Selecting may include determining the portion of the fiber prone to impairments by measurement, simulation, fiber design specifications, or by any other method of identifying a portion of the amplification fiber that is prone to the effects of bending distortions.

As discussed above, a first portion of the amplification fiber may be a high-signal-power portion of the amplifying fiber in which noise produced by optical nonlinearities accumulates more quickly than at a second portion of the amplifying fiber. In one embodiment of the invention, the first portion is an output portion of the amplifying fiber in which signal power is at least 50% of its peak value. For example, the selected output portion may be approximately 20% of the total unbent length of the optical fiber. In one embodiment, a length of the output portion may be 10-50cm, or alternatively 8-30% of the overall unbent fiber length. In an alternative embodiment, the first portion includes at least one low intensity portion of the amplifying fiber in which poor energy extraction resulting from reduced gain interaction is greater than at a remaining portion of the amplifying fiber. For example, the selected input portion may be approximately 10-50cm, or alternatively 8-30% of the overall unbent fiber length. Alternatively, one could simply define the selected region in terms of the signal power. For example, the first portions can be those within a factor of 3-20 of the minimum or maximum signal power.

In another embodiment, the first portion of the amplifying fiber can be selected based on a signal power variation along the fiber. Specifically, the signal power may show localized portions of the amplifying fiber having a high power relative to other portions of the amplifying fiber. For example, a closed loop fiber assembly such as stretched-pulse laser will have predetermined regions of high signal power relative to other portions of the fiber, as will be further discussed below

In another embodiment, step 405 may include selecting a transition portion of the amplification fiber. As noted with respect to FIG. 6 in the background section above, conventional amplification fiber assemblies include opposing ends of an amplification fiber that extend from a coiled portion of the fiber in order to couple the amplification fiber to input and output devices. The present inventors have recognized that, not only are the extended portions provided without regard to bend distortion as discussed above, but the transition portion from the coil to the extended portions of the amplification fiber are abrupt transitions, which can cause mode coupling. More gradual transitions to the extended portion can also mitigate the effects of mode coupling in accordance with an embodiment of the invention. The impact of such mode coupling can be very significant in the bend distortion mitigation embodiments of the invention.

Once the portion(s) of the optical amplifying fiber that is prone to bending distortion effects is selected, a second portion of the amplifying fiber is coiled (sometimes around a spool) at a curvature radius, the second radius of curvature, to create a coil of amplifying fiber in step 405. The second portion of the amplifying fiber may be a continuous center length of the amplifying fiber, such as where the input and/or output end of the amplifying fiber is the first portions as discussed above. Alternatively, the second portion may be intermittent segments along the amplification fiber, such as those segments determined by an amplification profile of the fiber as discussed above. Further, as noted above, the second portion may be an entire remaining length of the fiber, or only a portion thereof. In one embodiment, the remaining portion of the amplification fiber can be coiled at a curvature radius of approximately 5-25cm or alternatively 10-20 cm. A purpose for coiling a remaining portion of the amplification fiber is to reduce an overall length of the amplification fiber assembly, but also to do so in a portion of the amplification fiber that is less susceptible to the effects of bend distortion.

In step 407, the first portion of the amplifying fiber is maintained at a predetermined arrangement configured to mitigate bend distortion impact in the at least one first portion. The predetermined arrangement may be a curvature having a radius, the first radius of curvature, that is greater than a threshold curvature radius where the effects of bending distortion become unacceptable. In one embodiment, the curvature radius of the predetermined arrangement is greater than approximately 15cm, alternatively greater than 20cm, or still alternatively greater than 25cm. Further, the predetermined radius should be greater than the coil radius to provide desired bend distortion mitigation. Thus, in one embodiment, the predetermined arrangement may be a straight arrangement having substantially no curvature. Alternatively, the curvature radius of the predetermined arrangement portion may be greater than the radius of a coiled portion of the amplification fiber.

In one embodiment of the invention, a transition region from a second, coiled portion of the fiber to a selected first portion of the fiber is arranged so that the curvature varies gradually with fiber length. The gradual variation of curvature between the high-curvature (i.e., small radius of curvature) of the coiled second portion and the low curvature of the first portion is arranged to mitigate mode coupling.

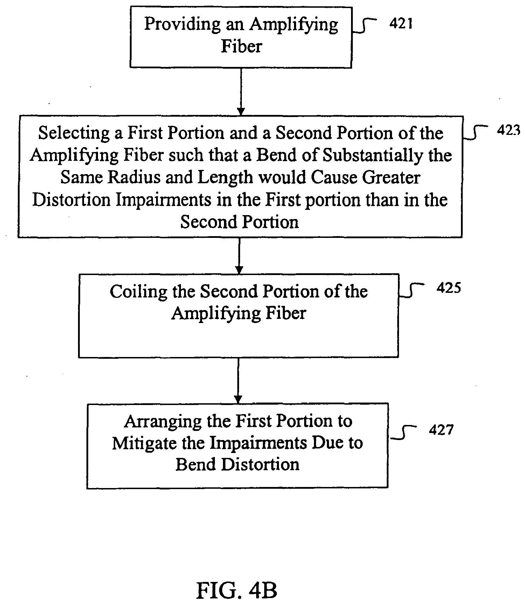

FIG. 4B is a flow chart depicting a method of producing an optical amplifying assembly in accordance with another embodiment of the present invention. As seen in this figure, the method begins with providing an amplifying fiber in step 421. The amplifying fiber may have any of the characteristics of the amplifying fibers described with respect to FIG. 4A.

Step 423 includes selecting a first portion and a second portion of the amplifying fiber such that a bend of substantially the same radius and length would cause greater distortion impairments in the first portion than in the second portion. As noted above, the first portion of the amplification fiber may be a high-signal-power portion of the amplifying fiber in which noise produced by optical nonlinearities accumulates more quickly than at a second portion of the amplifying fiber, or a low intensity portion of the amplifying fiber in which poor energy extraction resulting from reduced gain interaction is greater than at a remaining portion of the amplifying fiber. Further, the second portion of the amplifying fiber may be a continuous center length of the amplifying fiber, such as where the input and/or output end of the amplifying fiber is the first portions as discussed above, or the second portion may be intermittent segments along the amplification fiber, such as those segments determined by an amplification profile of the fiber as discussed above. However, the first and second portions of the amplifying fiber in FIG. 4B can be any of the configurations described with respect to FIG. 4A.

Step 425 includes coiling the second portion of the amplifying fiber, and in step 427, the first portion of the amplifying fiber is arranged to mitigate the impairments due to bend distortion. The configuration of the coil of the second portion and the arrangement of the first portion of the amplifying fiber can be any of the configurations discussed with respect to FIG. 4A. For example, the radius of curvature of the second portion of the amplifying fiber can be coiled at a curvature radius of approximately 5-25cm or alternatively 10-20 cm, and the curvature radius of the first portion can be greater than approximately 15cm, greater than 20cm, or greater than 25cm.

Thus, embodiments of the present invention create an amplification fiber assembly that both mitigates the effects of bend distortion and provides a reasonably sized package. Specifically, according to the present invention, a total length of the amplifying fiber assembly including the coil and all portions at a predetermined arrangement is less than the outstretched length of the amplifying fiber. A total length of the amplification fiber assembly can be 20-60cm for example. Alternatively, the assembly length is 15-50% of the unbent total fiber length.

FIG. 5 is a schematic illustration of an amplification fiber assembly in accordance with an embodiment of the invention. As seen in this figure the assembly includes an amplification fiber 501 having a coiled portion 503, input portion 505 and an output portion 507. As seen in the figure, the input portion 505 has a straight arrangement with substantially no curvature and a length Lᵢₙ. Similarly, the output portion 507 has a straight arrangement with substantially no curvature and a length Lₒᵤₜ. While FIG. 5 shows the input portion and output portion having a straight arrangement, it is not necessary to have more than one predetermined arrangement for mitigating the effects of bending distortion in accordance with the present invention. In this regard, phantom lines 509 of FIG. 5 shows transition regions that may optionally be provided at a relatively gradual change in curvature to mitigate mode coupling effects in accordance with an embodiment of the invention.

The relative length of a straight portion of optical fiber has been generally based on requirements to provide a small assembly package. For example, an EYDF design used for a high power clad pumping amplifier may include a 6m doped fiber portion coiled at a curvature radius of about 4cm, and a 20cm straight portion at an output of the fiber. In this case, the straight portion is about 3% of the total fiber length, and the ratio of length of the straight portion to the radius of curvature is about 5.

In another example a LMA YDF design used for a telecommunications single mode fiber may include a 4m doped fiber portion coiled at a curvature radius of about 3cm, and a 20cm straight portion at an output of the fiber. In this case, the straight portion is about 5% of the total fiber length, and the ratio of length of the straight portion to the radius is about 6.7.

In one embodiment of the present invention, a length of the first portion of the fiber (for example a portion that is maintained straight) is greater than 7% of the total fiber length, and/or a ratio of the length of the first portion to the second radius of curvature is greater than about 7.

As noted above, the effects of bend distortion can be mitigated in a closed loop amplifying fiber assembly. In such a configuration, signal power can be pre-determined as a function of optical length depending on dispersion, pulse chirp, or other characteristics. Evolution of pulse duration in a stretched pulse fiber laser is an example of how gain alone does not determine peak signal power. In accordance with the current invention, the power variation of an amplifier or laser can be determined by known methods, and the curvature of the fiber can be tailored according to this intensity profile.

Obviously, numerous modifications and variations of the present invention are possible in light of the above teachings. It is therefore to be understood that within the scope of the appended claims, the invention may be practiced otherwise than as specifically described herein.

## Claims

1. A method of producing an optical amplifying assembly, comprising:
providing (401; 421) an amplifying fiber (501),
selecting (403; 423) a first portion (505, 507) and a second portion (503) of the amplifying fiber (501) such that a bend of substantially the same radius of curvature and length would cause greater distortion impairments in the first portion (505, 507) than in the second portion (503), wherein the first portion includes all of the amplifying fiber in which power of a signal propagating through the amplifying fiber is at least 50 % of its peak value;
coiling (405; 425) the second portion (503), and
arranging (407; 427) the first portion (505, 507) to mitigate the impairments due to bend distortion by maintaining the first portion (505, 507) in a straight arrangement having substantially no curvature.

2. The method of claim 1, wherein said providing (401; 421) an optical amplifying fiber comprises providing a rare earth doped fiber.

3. The method of claim 1, wherein said selecting (403; 423) comprises selecting at least one high signal power first portion of the amplifying fiber in which noise produced by optical nonlinearities is greater than at the second portion of the amplifying fiber when the first and second portions have said bend of substantially the same radius and length.

4. A method of producing an optical amplifying assembly, comprising:
providing (401; 421) an amplifying fiber (501),
selecting (403; 423) a first portion (505, 507) and a second portion (503) of the amplifying fiber (501) such that a bend of substantially the same radius of curvature and length would cause greater distortion impairments in the first portion (505, 507) than in the second portion (503),
wherein said first portion (505, 507) includes at least one low signal power first portion of the amplifying fiber in which poor energy extraction resulting from reduced gain interaction is greater than at the second portion of the amplifying fiber when the first and second portions have said bend of substantially the same radius of curvature and length:
coiling (405; 425) the second portion (503), and
arranging (407; 427) the first portion (505, 507) to mitigate the impairments due to bend distortion by maintaining the first portion (505, 507) in a straight arrangement having substantially no curvature.

5. The method of claim 4, wherein said providing (421) an optical amplifying fiber comprises providing a rare earth doped fiber.

6. The method of claim 1, wherein said first portion comprises a plurality of non-contiguous portions of the amplifying fiber.

7. An amplifying fiber (501), comprising:
a first contiguous portion (505, 507) having a first length, the first contiguous portion further having a straight arrangement having substantially no curvature, the straight arrangement including all of the amplifying fiber in which power of a signal propagating through the amplifying fiber is at least 50% of its peak value; and
a second portion (503) having a radius of curvature and a second length, the first length being at least 7 times greater than the radius of curvature.

8. The amplifying fiber (501) of claim 7, wherein said amplifying fiber comprises a rare earth doped fiber.

9. The amplifying fiber (501) of claim 8, wherein said rare earth doped fiber comprises ytterbium or erbium, or a combination of both ytterbium and erbium.

10. The amplifying fiber (501) of claim 6, wherein said first contiguous portion corresponds to an output end portion (507).

11. The amplifying fiber of claim 6, further comprising:
a first transition region (509) with a gradual change in curvature from said first contiguous portion (505) to the second portion (503).

12. The amplifying fiber (501) of claim 7, wherein said first contiguous portion (505) comprises an input portion of the amplifying fiber (501).

13. The amplifying fiber (501) of claim 7, wherein said first contiguous portion (507) corresponds to an output end portion wherein power of a signal propagating through the amplifying fiber is at least 80% of its peak value.

## Patentansprüche

1. Ein Verfahren zum Herstellen einer optischen Verstärkungsanordnung, das folgende Schritte aufweist:
Bereitstellen (401; 421) einer Verstärkungsfaser (501),
Auswählen (403; 423) eines ersten Abschnitts (505, 507) und eines zweiten Abschnitts (503) der Verstärkungsfaser (501) derart, dass eine Biegung mit im Wesentlichen demselben Krümmungsradius und derselben Länge größere Verzerrungsbeeinträchtigungen in dem ersten Abschnitt (505, 507) als in dem zweiten Abschnitt (503) bewirken würde, wobei der erste Abschnitt die gesamte Verstärkungsfaser umfasst, wobei die Leistung eines Signals, das sich durch die Verstärkungsfaser ausbreitet, zumindest 50 % des Spitzenwerts derselben beträgt;
Wickeln (405; 425) des zweiten Abschnitts (503) und
Anordnen (407; 427) des ersten Abschnitts (505, 507), um die Beeinträchtigungen aufgrund Biegungsverzerrung zu mildern, indem der erste Abschnitt (505, 507) in einer geraden Anordnung gehalten wird, die im Wesentlichen keine Krümmung aufweist.

2. Das Verfahren gemäß Anspruch 1, bei dem das Bereitstellen (401; 421) einer optischen Verstärkungsfaser ein Bereitstellen einer seltenerddotierten Faser aufweist.

3. Das Verfahren gemäß Anspruch 1, bei dem das Auswählen (403; 423) ein Auswählen zumindest eines ersten Abschnitts der Verstärkungsfaser mit hoher Signalleistung aufweist, wobei ein durch optische Nichtlinearitäten erzeugtes Rauschen größer als an dem zweiten Abschnitt der Verstärkungsfaser ist, wenn der erste und zweite Abschnitt die Biegung mit im Wesentlichen demselben Radius und derselben Länge aufweisen.

4. Ein Verfahren zum Herstellen einer optischen Verstärkungsanordnung, das folgende Schritte aufweist:
Bereitstellen (401; 421) einer Verstärkungsfaser (501),
Auswählen (403; 423) eines ersten Abschnitts (505, 507) und eines zweiten Abschnitts (503) der Verstärkungsfaser (501) derart, dass eine Biegung mit im Wesentlichen demselben Krümmungsradius und derselben Länge größerer Verzerrungsbeeinträchtigungen in dem ersten Abschnitt (505, 507) als in dem zweiten Abschnitt (503) bewirken würde,
wobei der erste Abschnitt (505, 507) zumindest einen ersten Abschnitt der Verstärkungsfaser mit geringer Signalleistung umfasst, wobei eine schlechte Energiegewinnung, die aus reduzierter Gewinnwechselwirkung resultiert, größer als an dem zweiten Abschnitt der Verstärkungsfaser ist, wenn der erste und zweite Abschnitt die Biegung mit im Wesentlichen demselben Krümmungsradius und derselben Länge aufweisen:
Wickeln (405; 425) des zweiten Abschnitts (503) und
Anordnen (407; 427) des ersten Abschnitts (505, 507), um die Beeinträchtigungen aufgrund Biegungsverzerrung zu mildern, indem der erste Abschnitt (505, 507) in einer geraden Anordnung gehalten wird, die im Wesentlichen keine Krümmung aufweist.

5. Das Verfahren gemäß Anspruch 4, bei dem das Bereitstellen (421) einer optischen Verstärkungsfaser ein Bereitstellen einer seltenerddotierten Faser aufweist.

6. Das Verfahren gemäß Anspruch 1, bei dem der erste Abschnitt eine Mehrzahl nicht zusammenhängender Abschnitte der Verstärkungsfaser aufweist.

7. Eine Verstärkungsfaser (501), die folgende Merkmale aufweist:
einen ersten zusammenhängenden Abschnitt (505, 507) mit einer ersten Länge, wobei der erste zusammenhängende Abschnitt ferner eine gerade Anordnung aufweist, die im Wesentlichen keine Krümmung aufweist, wobei die gerade Anordnung die gesamte Verstärkungsfaser umfasst, wobei die Leistung eines Signals, das sich durch die Verstärkungsfaser ausbreitet, zumindest 50 % des Spitzenwerts derselben beträgt; und
einen zweiten Abschnitt (503) mit einem Krümmungsradius und einer zweiten Länge, wobei die erste Länge zumindest 7 mal größer als der Krümmungsradius ist.

8. Die Verstärkungsfaser (501) gemäß Anspruch 7, wobei die Verstärkungsfaser eine seltenerddotierte Faser aufweist.

9. Die Verstärkungsfaser (501) gemäß Anspruch 8, bei der die seltenerddotierte Faser Ytterbium oder Erbium oder eine Kombination von sowohl Ytterbium als auch Erbium aufweist.

10. Die Verstärkungsfaser (501) gemäß Anspruch 6, bei der der erste zusammenhängende Abschnitt einem Ausgabeendabschnitt (507) entspricht.

11. Die Verstärkungsfaser (501) gemäß Anspruch 6, die ferner folgendes Merkmal aufweist:
eine erste Übergangsregion (509) mit einer graduellen Änderung der Krümmung von dem ersten zusammenhängenden Abschnitt (505) zu dem zweiten Abschnitt (503).

12. Die Verstärkungsfaser (501) gemäß Anspruch 7, bei der der erste zusammenhängende Abschnitt (505) einen Eingabeabschnitt der Verstärkungsfaser (501) aufweist.

13. Die Verstärkungsfaser (501) gemäß Anspruch 7, bei der der erste zusammenhängende Abschnitt (507) einem Ausgabeendabschnitt entspricht, wobei die Leistung eines Signals, das sich durch die Verstärkungsfaser ausbreitet, zumindest 80 % des Spitzenwerts derselben beträgt.

## Revendications

1. Procédé de fabrication d'un ensemble d'amplification optique, comprenant le fait de:
prévoir (401; 421) une fibre d'amplification (501),
sélectionner (403; 423) une première partie (505, 507) et une deuxième partie (503) de la fibre d'amplification (501) de sorte qu'une courbure de sensiblement les mêmes rayon de courbure et longueur provoquerait des altérations de distorsion plus importantes dans la première partie (505, 507) que dans la deuxième partie (503), où la première partie comporte l'ensemble de la fibre d'amplification dans laquelle la puissance d'un signal se propageant à travers la fibre d'amplification est au moins de 50% de sa valeur de crête;
enrouler (405; 425) la deuxième partie (503), et
disposer (407; 427) la première partie (505, 507) de manière à atténuer les dégradations dues à la distorsion de courbure en maintenant la première partie (505, 507) selon une disposition en ligne droite ne présentant pratiquement pas de courbure.

2. Procédé selon la revendication 1, dans lequel ladite prévision (401; 421) d'une fibre d'amplification optique comprend le fait de prévoir une fibre dopée aux terres rares.

3. Procédé selon la revendication 1, dans lequel ladite sélection (403; 423) comprend le fait de sélectionner au moins une première partie à haute puissance de signal de la fibre d'amplification dans laquelle le bruit produit par les non-linéarités optiques est supérieur à celui dans la deuxième partie de la fibre d'amplification lorsque les première et deuxième parties présentent ladite courbure de sensiblement les mêmes rayon et longueur.

4. Procédé de fabrication d'un ensemble amplificateur optique, comprenant le fait de:
prévoir (401; 421) une fibre d'amplification (501),
sélectionner (403; 423) une première partie (505, 507) et une deuxième partie (503) de la fibre d'amplification (501) de sorte qu'une courbure de sensiblement les mêmes rayon de courbure et longueur provoquerait des altérations de distorsion plus importantes dans la première partie (505, 507 que dans la deuxième partie (503),
dans lequel ladite première partie (505, 507) comporte au moins une première partie à faible puissance de signal de la fibre d'amplification dans laquelle une extraction d'énergie médiocre résultant d'une interaction de gain réduite est supérieure à celle dans la deuxième partie de la fibre d'amplification lorsque les première et deuxième parties présentent ladite courbure de sensiblement les mêmes rayon de courbure et longueur,
enrouler (405; 425) la deuxième partie (503), et
disposer (407; 427) la première partie (505, 507) de manière à atténuer les dégradations dues à la distorsion de courbure en maintenant la première partie (505, 507) selon une disposition en ligne droite ne présentant pratiquement pas de courbure.

5. Procédé selon la revendication 4, dans lequel ladite prévision (421) d'une fibre d'amplification optique comprend le fait de prévoir une fibre dopée aux terres rares.

6. Procédé selon la revendication 1, dans lequel ladite première partie comprend une pluralité de parties non contiguës de la fibre d'amplification.

7. Fibre d'amplification (501), comprenant:
une première partie contiguë (505, 507) présentant une première longueur, la première partie contiguë présentant par ailleurs une disposition en ligne droite ne présentant pratiquement pas de courbure, la disposition en ligne droite comportant l'ensemble la fibre d'amplification dans laquelle la puissance d'un signal se propageant à travers la fibre d'amplification est au moins de 50% de sa valeur de crête; et
une deuxième partie (503) présentant un rayon de courbure et une deuxième longueur, la première longueur étant au moins 7 fois plus grande que le rayon de courbure.

8. Fibre d'amplification (501) selon la revendication 7, dans laquelle ladite fibre d'amplification comprend une fibre dopée aux terres rares.

9. Fibre d'amplification (501) selon la revendication 8, dans laquelle ladite fibre dopée aux terres rares comprend de l'ytterbium ou de l'erbium, ou une combinaison de tant l'ytterbium que de l'erbium.

10. Fibre d'amplification (501) selon la revendication 6, dans laquelle ladite première partie contigüe correspond à une partie d'extrémité de sortie (507).

11. Fibre d'amplification selon la revendication 6, comprenant par ailleurs:
une première région de transition (509) avec un changement progressif de courbure de ladite première partie contiguë (505) à la deuxième partie (503).

12. Fibre d'amplification (501) selon la revendication 7, dans laquelle ladite première partie contigüe (505) comprend une partie d'entrée de la fibre d'amplification (501).

13. Fibre d'amplification (501) selon la revendication 7, dans laquelle ladite première partie contigüe (507) correspond à une partie d'extrémité de sortie dans laquelle la puissance d'un signal se propageant à travers la fibre d'amplification est au moins de 80% de sa valeur de crête.
